# EUROPÄISCHE PATENTSCHRIFT

(11) **EP 0 990 289 B1**
(45) Veröffentlichungstag und Bekanntmachung des Hinweises auf die Patenterteilung: **13.08.2003**
(21) Anmeldenummer: 98925544.3
(22) Anmeldetag: 06.05.1998
(51) Int. Cl.: H02G 1/08

(54) **ZANGE ZUM VERSCHIEBEN VON FLEXIBLEM STRANGMATERIAL**
PINCERS FOR MOVING FLEXIBLE STRAND MATERIAL
PINCE POUR FAIRE COULISSER UN MATERIAU ALLONGE FLEXIBLE

(30) Priorität: 16.06.1997 DE 19725364
(43) Veröffentlichungstag der Anmeldung: 05.04.2000
(73) Patentinhaber: Katimex Cielker GmbH, 54584 Jünkerath (DE)
(72) Erfinder: HASBERG, Josef, D-51491 Overath (DE)
(74) Vertreter: Wanischeck-Bergmann, Axel, Dipl.-Ing.
(86) Internationale Anmeldenummer: EP9802667
(87) Internationale Veröffentlichungsnummer: WO98058430

(56) Entgegenhaltungen:
- CH-A- 580 344
- DE-A- 3 416 652
- DE-C- 3 710 922
- NL-A- 9 200 038
- US-A- 2 606 466
- US-A- 2 718 376

## Beschreibung

Die Erfindung betrifft eine Zange zum Verschieben von flexiblem Strangmaterial, insbesondere flexiblen Stäben zum Einziehen von Kabeln in Kabelschutzrohre, mit einem Zangenkörper der eine längsverlaufende Öffnung zur Aufnahme eines Teiles des Strangmaterials aufweist, wobei der Zangenkörper einen schwenkbar gelagerten Handgriff aufweist, der derart im Zangenkörper gelagert ist, daß der Handgriff bei Betätigung mindestens teilweise in die längsverlaufende Öffnung des Zangenkörpers eingreift und dem Handgriff im Zangenkörper gegenüberliegend eine antreibbare Fördereinrichtung angeordnet ist.
Eine derartige gemäß dem Oberbegriff des Anspruchs 1 gestaltete Zange ist aus der CH-A-580 344 bekannt.
Derartige Zangen sind aus dem Stand der Technik bekannt. Beispielsweise offenbart die DE 34 16 652 C2 eine gattungsgemäße Zange, die einen längsverlaufenden Schlitz zur Aufnahme eines Teils des Strangmaterials, zum Beispiel von Kabeln aufweist, wobei eine zu dem Schlitz verschiebbare Klemmleiste vorgesehen ist, welche von einem Handgriff betätigbar ist. Eine weitere Zange ist aus der DE 37 10 922 C1 bekannt, die einen Zangenkörper hat, welcher aus einem länglichen Griffteil und einem angeformten erweiterten Kopfteil besteht, wobei der Handgriff eine angeformte Leiste aufweist und in dem Kopfteil derart gelagert ist, daß die Leiste bei Betätigung des Handgriffs mindestens teilweise in die längsverlaufende Rille des Zangenkörpers eingreift. Die voranstehend beschriebenen Zangen haben sich für die Handhabung von flexiblem Strangmaterial bewährt.

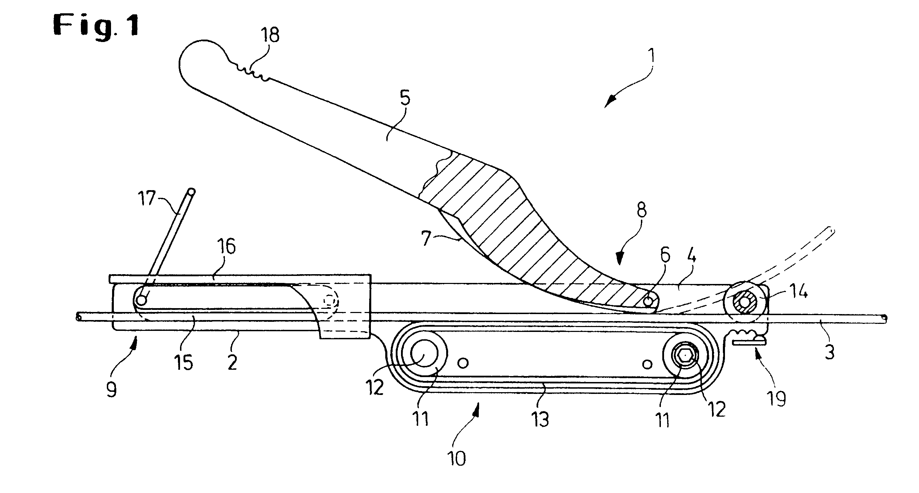

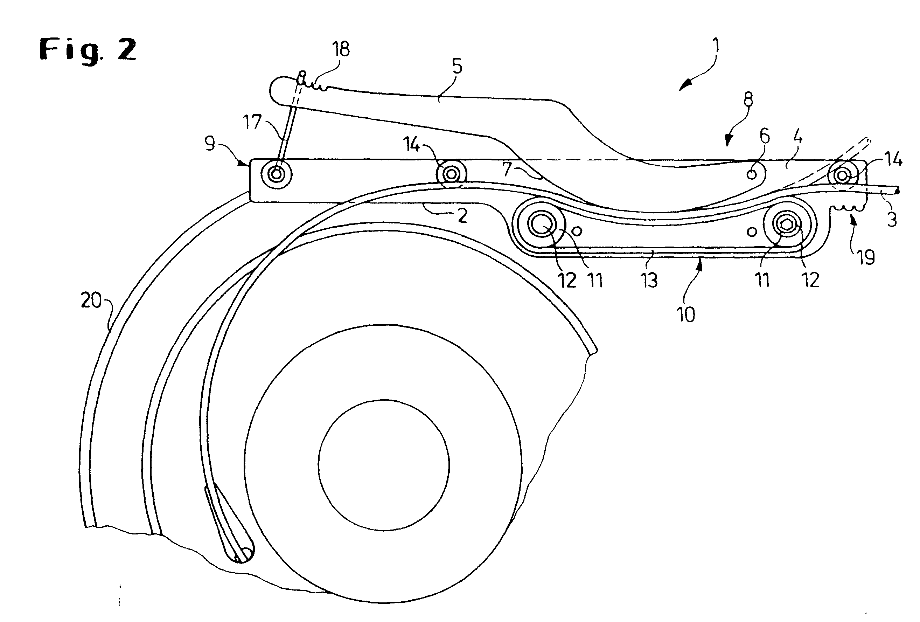

Aus der NL-A-92 00 038 ist eine Vorrichtung zum Verschieben von flexiblem Strangmaterial bekannt, welche im wesentlich gemäß Figur 1 und zugehöriger Beschreibung dieser Druckschrift zweiteilig ausgebildet ist. Zum einen weist diese Vorrichtung einen Handgriff auf, an dem pistolenartig ein Element angeordnet ist, welches eine in seiner Längsrichtung verlaufende Führungsnut aufweist, in die Antriebselemente eingreifen, die auf die Außenmantelfläche des Strangmaterials reibschlüssig einwirken, um das Strangmaterial in zumindest einer Richtung zu bewegen. Diese Antriebsmittel können gemäß Figur 2 als zwei parallel zueinander verlaufende und im Abstand zueinander angeordnete Treibriemen ausgebildet sein, die mit jeweils einem Trum auf das Strangmaterial einwirken. Die Treibriemen werden über ein Getriebe von einem Antriebsmotor angetrieben.

Von Bedeutung ist hierbei die Tatsache, daß beide Treibriemen im pistolenartig zum Handgriff angeordneten Element ortsfest zueinander angeordnet sind und somit nur für ein geringes Spektrum von unterschiedlich dickem Strangmaterial geeignet sind.

Weitere Kabelzieheinrichtungen sind aus der US-A-2 606 466 bzw. der US-A-2 718 376 bekannt. Bei der Zange gemäß der US-A-2 606 466 ist ein Antrieb nicht vorgesehen, so dass das zu ziehende Kabel nur in der Zange geklemmt und anschließend durch Bewegung der Zange bewegt werden kann. Bei der Einrichtung der US-A-2 718 376 handelt es sich nicht um eine Zange, sondern um eine Vorrichtung zum Speichern eines flexiblen Strangmaterials, dass zum Einziehen von Kabeln verwendet werden kann.

Ausgehend von diesem Stand der Technik liegt der Erfindung die Aufgabe zugrunde, eine gattungsgemäße Zange dahingehend weiterzuentwickeln, daß die Handhabung der Zange wesentlich vereinfacht wird, wobei insbesondere die aufzuwendenden Kräfte zum Verschieben des flexiblen Strangmaterials reduziert werden sollen und ein Verschieben des flexiblen Strangmaterials ohne Bewegung der Zange möglich sein soll.

Die Lösung dieser Aufgabenstellung sieht vor, daß die Fördereinrichtung als Treibriemen ausgebildet ist, der in Längsrichtung des Zangenkörpers umlaufend angeordnet ist.

Die erfindungsgemäße Zange sieht somit vor, dass die Fördereinrichtung als Treibriemen ausgebildet ist, der in Längsrichtung des Zangekörpers umlaufend angeordnet ist und reibschlüssig auf das flexible Strangmaterial wirkt und dieses flexible Strangmaterial in Längsrichtung des Zangenkörpers verschiebt. Um die notwendige Reibkraft zu erzielen wird hierzu der Handgriff auf das Strangmaterial gepreßt, so daß das Strangmaterial mit großer Reibkraft auf der Fördereinrichtung gefördert werden kann. Der Handgriff weist insbesondere eine kreisbogenabschnittförmige Druckfläche auf. In Kombination mit einer Vorrichtung zur Aufnahme und Ausgabe des Strangmaterials ist vorgesehen, daß der Radius der kreisbogenabschnittförmigen Druckfläche des Handgriffs im wesentlichen mit dem Radius einer der Aufnahme des Strangmaterials dienenden Abrolltrommel übereinstimmt. Der Handgriff mit der Druckfläche dient demzufolge als Druckhebel und hat darüber hinaus die Aufgabe, durch die aufgebrachte Druckkraft den Riemen zu spannen. Die Druckfläche ist als Gleitleiste ausgebildet, so daß in diesem Bereich, das heißt im Bereich zwischen dem Strangmaterial und der Gleitleiste die Reibkraft möglichst gering ist.

Der Treibriemen hat den Vorteil, daß das Strangmaterial über eine große Länge des Zangenkörpers mit der Fördereinrichtung in Kontakt steht. Der Treibriemen weist in seiner dem Strangmaterial zugewandten Oberfläche vorzugsweise eine Ausnehmung auf. Der Querschnitt dieser Ausnehmung ist vorzugsweise halbkreisförmig ausgebildet und stimmt insbesondere mit dem halben Querschnitt des Strangmaterials überein. Es ist aber auch denkbar, daß eine hiervon abweichende Querschnittsform der Ausnehmung gewählt wird. Beispielsweise hat sich auch eine im Querschnitt dreieckige Form für die Ausnehmung bewährt, wie auch die Möglichkeit besteht, die Ausnehmung polygonal im Querschnitt auszubilden. Die dreieckige Ausgestaltung der Ausnehmung hat insbesondere den Vorteil, daß diese Ausnehmung im wesentlichen vom Durchmesser des Strangmaterials unabhängig ist, das heißt, daß auf das Strangmaterial die beiden Seitenflächen der Ausnehmung einwirken.

Es ist ferner vorgesehen, daß die Fördereinrichtung eine Achse zum Anschluß eines Antriebs aufweist, die über zumindest eine Seitenfläche des Zangenkörpers hervorsteht. An diese Achse kann der Antrieb der Fördereinrichtung angeschlossen werden, wobei es sich bei einem Treibriemen, der über zwei beabstandet zueinander angeordnete Umlenkrollen umläuft, als vorteilhaft erwiesen hat, beide Achsen der Umlenkrollen über zumindest eine Seitenfläche des Zangenkörpers hervorstehen zu lassen, so daß über beide Achsen der Umlenkrollen das notwendige Antriebsmoment auf den Treibriemen übertragen werden kann. Somit ist sichergestellt, daß in beiden Förderrichtungen der Fördereinrichtung eine Zugkraft im Obertrum, das heißt dem Strangmaterial zugewandten Trum des Treibriemens aufgebracht werden kann.

Die Achse ist zumindest an ihrem über eine Seitenfläche des Zangenkörpers hervorstehenden Ende im Querschnitt polygonal ausgebildet. Eine polygonale Querschnittsausbildung der Achse hat den Vorteil, daß die Antriebsmomentenübertragung zwischen dem Antrieb und der Fördereinrichtung bei entsprechend ausgebildeten Verbindungselementen form- und/oder kraftschlüssig erfolgen kann. Vorzugsweise erfolgt der Antrieb der Fördereinrichtung manuell mit einer Kurbel und/oder maschinell, beispielsweise mit einem Elektromotor und/oder einer Handbohrmaschine oder dergleichen. Das im Querschnitt polygonal ausgebildete Ende der Achse ist insbesondere sechseckig in Form einer Bitaufnahme ausgebildet. Vorzugsweise weist die Bitaufnahme einen Kugelkopf üblicher Ausgestaltung auf, so daß der Antrieb auch unter einem bestimmten Winkel schräg an die Achse ankoppelbar ist.

Der Treibriemen ist insbesondere als Zahnriemen ausgebildet, um eine formund/oder kraftschlüssige Momentenübertragung zwischen den Umlenkrollen und dem Treibriemen zu ermöglichen. Hierbei hat es sich als vorteilhaft erwiesen, wie dies bereits voranstehend ausgeführt ist, daß der Treibriemen über zwei im Abstand zueinander angeordnete Antriebsrollen umläuft. Beide Antriebsrollen sind antreibbar. Zumindest eine der Antriebsrollen ist als Antriebsritzel ausgebildet, so daß zumindest zwischen dem Antriebsritzel und dem Zahnriemen eine formschlüssige Momentenübertragung erfolgt.

Der Treibriemen bzw. die Fördereinrichtung weist eine den Reibkoeffizienten erhöhende Oberfläche auf. Diese Oberfläche kann entweder durch materialspezifische Komponenten des Treibriemens oder durch eine Beschichtung eines üblichen Treibriemens ausgebildet sein.

Nach einem weiteren Merkmal der Erfindung ist vorgesehen, daß der Zangenkörper zumindest eine Führungsrolle aufweist, die in Längsrichtung des Zangenkörpers vor und/oder hinter der Fördereinrichtung angeordnet sind. Anstelle einer Führungsrolle kann auch ein anderes Führungselement vorgesehen werden, beispielsweise eine Führungsplatte oder dergleichen. Die Führungselemente bzw. Führungsrollen haben den Vorteil, daß das Strangmaterial in einer bevorzugten Position der Fördereinrichtung zugeführt wird, so daß eine maximal mögliche Reibkraftübertragung erfolgt.

Vorzugsweise weisen die Führungsrollen in ihrem Mittelbereich eine Querschnittsverringerung auf, da es sich als vorteilhaft erwiesen hat, den Abstand zwischen der Querschnittsverringerung und der Fördereinrichtung entsprechend dem Durchmesser des zu fördernden Strangmaterials auszubilden, so daß das Strangmaterial zwangsweise durch die Querschnittsverringerung geführt wird. Es hat sich als vorteilhaft erwiesen, die Achse mit der Führungsrolle bzw. der Antriebszahnscheibe und/oder der Bitaufnahme einteilig auszubilden. Hierdurch ergeben sich wesentliche Produktionsvereinfachungen und damit verbundene Kostenersparnisse bei der Herstellung der erfindungsgemäßen Zange.

Der Zangenkörper besteht insbesondere aus einem länglichen Griffteil und einem angeformten Kopfteil, so daß die Handhabung mit einer Hand des Benutzers möglich ist.

Nach einem weiteren Merkmal ist vorgesehen, daß der Zangenkörper an einer Vorrichtung zur Aufnahme und Ausgabe von flexiblem Strangmaterial anflanschbar und befestigbar ist. Hierbei kann der Zangenkörper entweder integraler Bestandteil der Vorrichtung zur Aufnahme und Ausgabe von flexiblem Strangmaterial sein, oder an eine solche Vorrichtung angeschlossen werden, wobei insbesondere der Handgriff des Zangenkörpers entsprechend adaptierbar an die Vorrichtung ausgebildet ist.

Der Handgriff ist im Zangenkörper verrastbar, um ein ermüdungsfreies Betätigen der Zange bei großen ab- bzw. aufzuspulenden Längen von Strangmaterial zu ermöglichen. Hierbei hat es sich als vorteilhaft erwiesen, den Handgriff im Zangenkörper in verschiedenen Stellungen verrastbar auszubilden, so daß eine jede Raststellung auf eine bestimmte Materialstärke des Strangmaterials angepaßt ist. Eine derartige Verrastung kann beispielsweise zwischen dem Zangenkörper und dem Handgriff vorgesehen sein. Es ist aber auch denkbar, daß der Handgriff über einen Gummiring oder eine Metallklammer mit dem Zangenkörper verrastbar ist, wobei der Gummiring bzw. die Metallklammer derart am Zangenkörper angeordnet sein können, daß sie über das freie Ende des Handgriffs schiebbar sind. Bei der Verwendung einer Metallklammer besteht dann noch die Möglichkeit, den Handgriff in Längsrichtung mit mehreren Kerben auszugestalten, die quer zur Längsrichtung des Handgriffs verlaufen und in die die Metallklammer einrastbar ist. Hierdurch können ebenfalls unterschiedliche Raststellungen bei einem schräg zur Längsrichtung des Zangenkörpers verlaufenden Handgriff eingestellt werden.

In vorteilhafter Weise kann der Zangenkörper ein Längenmeßwerk aufweisen, um die Länge des ab- bzw. aufgespulten Strangmaterials anzugeben.

Nach einem weiteren Merkmal der Erfindung ist vorgesehen, daß der Zangenkörper an seinem vorderen Ende ein Halteelement aufweist, mit dem der Zangenkörper form- und/oder reibschlüssig an einer Verteilerdose oder dergleichen arretierbar ist. Ein derartiges Halteelement kann beispielsweise als Stützkante, Gummipuffer oder Kralle ausgebildet sein. Diese Ausgestaltung hat insbesondere den Vorteil, daß bei großen Reactio-Kräften durch das Einschieben des strangförmigen Materials in ein Hohlrohr die Zange im Bereich der Einschubstelle, in der Regel im Bereich einer Verteilerdose arretierbar ist. Hierdurch wird eine weitere Vereinfachung der Arbeit mit dieser Zange erzielt. Das Halteelement kann aber auch eine andere Ausgestaltung aufweisen. Beispielsweise besteht die Möglichkeit, das Halteelement als hinterschnittene U-förmige Ausnehmung im Zangenkörper auszubilden, wobei eine Hinterschneidung beidseitig, das heißt an beiden Schenkeln der U-förmigen Ausnehmung vorgesehen sein kann. Ferner hat es sich als vorteilhaft erwiesen, das Halteelement als einen seitlich über den Zangenkörper hervorstehenden Bolzen auszubilden. Dieser Bolzen kann beispielsweise als Achsverlängerung der vorderen Führungsrolle ausgebildet sein.

Nach einem weiteren Merkmal der Erfindung ist vorgesehen, daß der Zangenkörper aus zwei parallel zueinander angeordneten plattenförmigen Elementen besteht, die miteinander verbunden sind, wobei zwischen den plattenförmigen Elementen zumindest die Fördereinrichtung angeordnet ist. Vorzugsweise sind die plattenförmigen Elemente durch die Achsen der Antriebsrollen und der Führungsrollen miteinander verbunden. Hierbei hat es sich als vorteilhaft erwiesen, die plattenfömigen Elemente aus Metall, insbesondere Leichtmetall, wie beispielsweise Aluminium auszubilden, wohingegen die Führungsrollen aus einem zähharten Kunststoff bestehen und auf Metallachsen gelagert sind. Es ist aber auch denkbar, daß der Zangenkörper vollständig aus Kunststoff hergestellt ist.

Bei einer weiteren vorteilhaften Ausgestaltung der erfindungsgemäßen Zange ist vorgesehen, daß an den Zangenkörper ein Führungsrohr für das Strangmaterial anschließbar ist. Dieses Führungsrohr kann an beiden Enden des Zangenkörpers vorgesehen sein und dient zum einen der Führung des strangförmigen Materials zwischen der Zange und einer Speichervorrichtung für das strangförmige Material und zum anderen der Führung des strangförmigen Materials zwischen der Zange und der Einführstelle.

Das Führungsrohr dient als Führungselement. Ein derartiges Führungselement kann aber auch als Spiralfeder ausgebildet sein. Eine Spiralfeder hat den Vorteil, daß sie flexibel ist und daß das durchgeführte Strangmaterial zwischen den einzelnen Spiralen der Spiralfeder erkennbar ist. Darüber hinaus hat die Spiralfeder den Vorteil, daß durch die Beabstandung der einzelnen Spiralen die Spiralfeder in beispielsweise einer Verteilerdose verrastet werden kann. Die Spiralfeder dient somit nicht nur der Führung des Strangmaterials sondern auch als Halteelement mit Hakenfunktion. Darüber hinaus ist die Spiralfeder knicksicher und preiswert. Die Spiralfeder hat ferner schonende Eigenschaften in Bezug auf das flexible Material, da die Reibung zwischen der Spiralfeder und dem Strangmaterial wesentlich verringert ist. Nach einem weiteren Merkmal der Erfindung ist vorgesehen, daß die Spiralfeder entsprechend ihren Windungen in eine korrespondierende Halterung einschraubbar bzw. herausschraubbar ausgebildet ist, so daß die Spiralfeder hinsichtlich ihrer Länge einstellbar ist.

Schließlich ist nach einem weiteren Merkmal der Erfindung vorgesehen, daß der Zangenkörper, insbesondere im Bereich des Griffteils als Rohr ausgebildet ist. Demzufolge ist der Zangenkörper in diesem Bereich, der als Handansatz dient, geschlossen, wodurch Quetschverletzungen der handhabenden Hand durch das Strangmaterial verhindert werden. Weiterhin werden aber auch Brandverletzungen durch eventuell schnell gefördertes Strangmaterial ausgeschlossen, da in diesem Bereich ein Kontakt zwischen dem Strangmaterial und der handhabenden Hand vermieden wird.

Weitere Merkmal und Vorteile der erfindungsgemäßen Zange ergeben sich aus der nachfolgenden Beschreibung der zugehörigen Zeichnung. In der Zeichnung zeigen:
- Figur 1: eine Seitenansicht der erfindungsgemäßen Zange in geöffneter Position;
- Figur 2: die Zange gemäß Figur 1 in Verbindung mit einer Vorrichtung zur Aufnahme von Strangmaterial in geschlossener Stellung in Seitenansicht;
- Figur 3: eine alternative Ausgestaltung der Zange gemäß den Figuren 1 und 2 und
- Figur 4: eine weitere alternative Ausgestaltung der Zange gemäß den Figuren 1 bis 3.

Eine in der Figur 1 dargestellte Zange 1 besteht aus einem Zangenkörper 2, der eine längsverlaufende Öffnung zur Aufnahme eines Teils eines flexiblen Strangmaterials 3 aufweist. Der Zangenkörper 2 besteht aus zwei plattenförmigen Elementen, von denen in der Figur 1 nur das plattenförmige Element 4 dargestellt ist.

Die beiden plattenförmigen Elemente 4 sind im Abstand zueinander angeordnet und bilden zwischen sich die Öffnung des Strangmaterials 3. Darüber hinaus ist zwischen den plattenförmigen Elementen 4 ein Handgriff 5 um eine Achse 6 schwenkbar gelagert.

Der Handgriff 5 weist eine im Bereich der Achse 6 beginnende und in den Zangenkörper 2 ausgerichtete Druckfläche 7 auf. Darüber hinaus ist der Handgriff 5 im Bereich eines Kopfteils 8 des Zangenkörpers 2 angeordnet und erstreckt sich in Richtung eines länglichen Griffteils 9 des Zangenkörpers 2.

Die Druckfläche 7 ist durch eine Bewegung des Handgriffs 5 in Richtung des Griffteils 9 des Zangenkörpers 2 auf das Strangmaterial 3 preßbar.

Der Druckfläche 7 des Handgriffs 5 gegenüberliegend ist eine antreibbare Fördereinrichtung 10 im Zangenkörper 2, das heißt im Kopfteil 8 des Zangenkörpers 2 angeordnet. Die Fördereinrichtung 10 besteht aus zwei im Abstand zueinander angeordneten Antriebsrollen 11, die um Achsen 12 drehbar im Zangenkörper 2 gelagert sind. Darüber hinaus weist die Fördereinrichtung 10 einen als Zahnriemen ausgebildeten Treibriemen 13 auf, der die Antriebsrollen 11, welche als Antriebsritzel ausgebildet sind, umschlingt.

Beide Achsen 12 stehen über eine Seitenfläche des plattenförmigen Elementes 4 hervor und weisen einen in diesem Bereich polygonalen Querschnitt auf. An diese im Querschnitt polygonal ausgebildeten Abschnitte der Achsen 12 ist ein nicht näher dargestellter Antrieb anflanschbar. Der Antrieb kann beispielsweise aus einer Handkurbel und/oder einem Elektromotor bestehen. Bevorzugt ist der Antrieb als Handbohrmaschine ausgebildet, deren Spannfutter mit dem polygonalen Abschnitt einer Achse 12 verbindbar ist.

Der Treibriemen 13 weist auf seiner dem Strangmaterial 3 zugewandten Oberfläche einen den Reibkoeffizienten erhöhenden Betrag auf.

An beiden Enden der Fördereinrichtung 10 weist die Zange 1 ein Führungselement auf. Im Bereich des Kopfteiles 8 des Zangenkörpers 2 ist dieses Führungselement als Führungsrolle 14 ausgebildet, wohingegen im Bereich des Griffteils 9 des Zangenkörpers 2 das Führungselement stabförmig ausgebildet ist.

Die Führungsrolle 14 hat in ihrem Mittelbereich eine Querschnittsverringerung, die nutförmig ausgebildet ist und der Führung des Strangmaterials 3 dient. Es ist in der Figur 1 zu erkennen, daß das Strangmaterial 3 entweder an einer der Fördereinrichtung 10 zugewandten Tangente oder an einer der Fördereinrichtung abgewandten Tangente der Führungsrolle 14 geführt werden kann. Letzter Fall ist in Figur 1 gestrichelt dargestellt.

Die Führungsleiste 15 im Griffteil 9 des Zangenkörpers 2 weist ebenfalls eine Ausnehmung auf, die im wesentlichen mit dem Querschnitt des Strangmaterials 3 übereinstimmt und in Längsrichtung der Zange 1 verläuft. Auch diese Ausnehmung dient der Führung des Strangmaterials 3.

Es ist ferner zu erkennen, daß der Griffteil 9 eine Ummantelung 16 aufweist, die zumindest die eingangs dargestellte Öffnung zur Aufnahme des Strangmaterials 3 im Zangenkörper 2 und insbesondere auch die Unterseite des Zangenkörpers 2 verschließt. Diese Ummantelung 16 dient der Vermeidung von Verletzungen der handhabenden Hand bei schneller Förderung des Strangmaterials 3.

Schließlich ist noch zu erkennen, daß der Zangenkörper 2 im Bereich des Griffteils 9 eine als Metallklammer 17 ausgebildete Arretierung aufweist, mit der der Handgriff 5 relativ zum Zangenkörper 2 festgelegt werden kann. Die im wesentlichen U-förmig ausgebildete Metallklammer 17 hat an ihren Schenkeln aufeinanderzu abgebogene Stege, die in diametral gegenüberliegende Bohrungen in den plattenförmigen Elementen 4 des Zangenkörpers 2 eingreifen, so daß die Metallklammer 17 um diese Bohrungen relativ zum Zangenkörper 2 verschwenkbar ist.

Nachdem der Handgriff 5 in Richtung auf den Griffteil 9 des Zangenkörpers 2 gedrückt ist, kann die Metallklammer 17 über den Handgriff 5 geschoben werden, wo die Metallklammer 17 in korrespondierende Nuten 18 einrasten kann. In dieser Stellung ist der Handgriff 5 derart mit dem Zangenkörper 2 im Bereich des Griffteils 9 verspannt, daß der notwendige Anspreßdruck des Strangmaterials 3 auf den Treibriemen 13 erzeugt wird, der ein im wesentlichen schlupffreies Fördern des Strangmaterials 3 innerhalb der Zange 1 ermöglicht.

Damit der Anpreßdruck in Abhängigkeit der zu fördernden Länge des Strangmaterials 3 bzw. des Durchmessers des zu fördernden Strangmaterials 3 angepaßt werden kann, weist der Handgriff 5 mehrere in Längsrichtung des Handgriffs 5 hintereinanderliegenden Nuten 18 auf, die rechtwinklig zur Längsrichtung des Handgriffs 5 verlaufen. Wird die Metallklammer 17 in die der Achse 6 zugewandte Nut 18 des Handgriffs 5 eingerastet, so ist der Anpreßdruck der Druckfläche 7 auf dem Strangmaterial 3 größer, als bei einer Verrastung der Metallklammer 17 in einer weiter von der Achse 6 entfernt liegenden Nut 18.

Im vorderen Bereich des Zangenkörpers 2, das heißt unterhalb der Führungsrolle 14 weist der Zangenkörper 2 ein Halteelement 19 auf, mit dem der Zangenkörper 2 beispielsweise an einer nicht näher dargestellten Verteilerdose arretiert werden kann, so daß die durch einen elektromotorischen Antrieb beim Einschieben des strangförmigen Materials 3 in eine Rohrleitung auftretenden Reaktionskräfte nicht ausschließlich manuell kompensiert werden müssen. Mit dem Halteelement 19 kann der Zangenkörper 2 form- und/oder reibschlüssig mit beispielsweise einer Verteilerdose verbunden werden. Dieses Halteelement 19 kann als Stützkante, Gummipuffer oder Kralle ausgebildet sein.

In Figur 2 ist die Zange 1 gemäß Figur 1 in Verbindung mit einer Vorrichtung 20 zur Aufnahme und Ausgabe von flexiblen Strangmaterial 3 dargestellt. Der Zangenkörper 3 kann zu diesem Zweck im Bereich seines Griffteils 9 derart ausgebildet sein, daß der Griffteil 9 form- und/oder kraftschlüssig mit der Vorrichtung 20 verbindbar ist. Es ergibt sich dann ein System aus einer Vorrichtung 20 zur Aufnahme und Ausgabe von flexiblen Strangmaterial 3 und einer angetriebenen Zange 1, die als Ausschub- bzw. Einziehvorrichtung bzw. -hilfe dient. Denkbar ist hierbei, daß der Zangenkörper 2 integraler Bestandteil einer entsprechenden Vorrichtung 20 oder mit einer solchen Vorrichtung 20 verbindbar, das heißt an einer solchen Vorrichtung 20 adaptierbar ist.

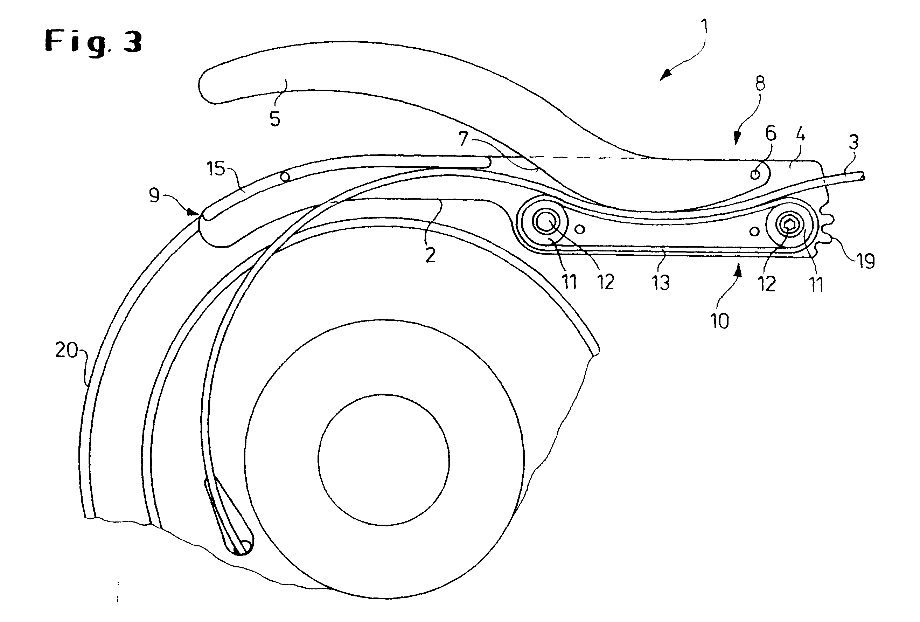

Die Figur 3 zeigt eine alternative Ausgestaltung der Zange 1, bei der der Handgriff 5 und das Griffteil 9 entsprechend der Außenkontur der Vorrichtung 20 ausgestaltet sind, so daß bei montierter Zange 1 an der Vorrichtung 2 keine scharfen Kanten mit entsprechender Verletzungsgefahr hervorstehen. Es ist zu erkennen, daß bei der in Figur 3 dargestellten Zange 1 das im Griffteil 9 vorgesehene Führungselement als entsprechend gebogene Führungsleiste 15 ausgebildet ist. Demgegenüber zeigt die Figur 2 eine Ausführungsform der Zange 1 mit einer vor der Fördereinrichtung 10 und einer hinter der Fördereinrichtung 10 angeordneten Führungsrolle 14.

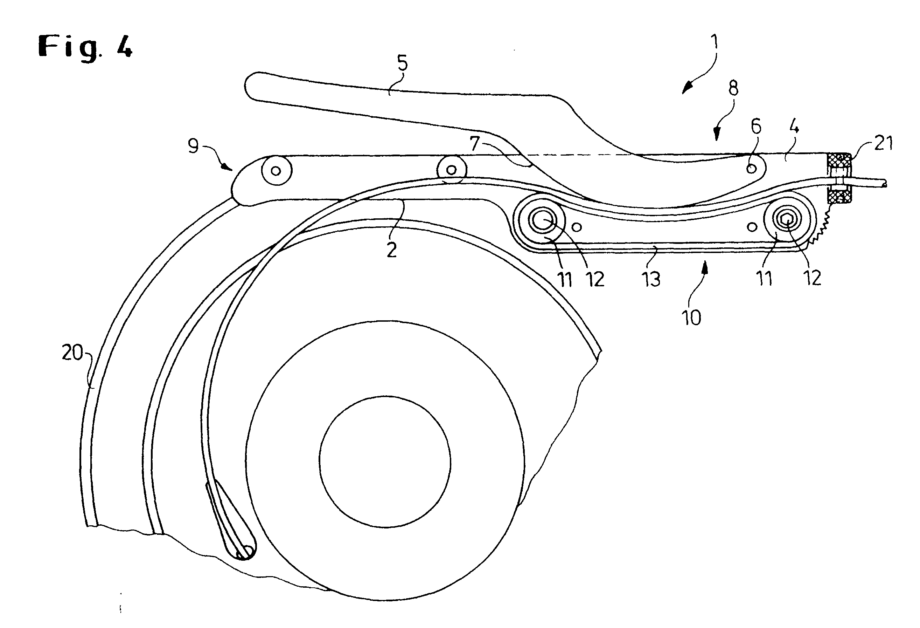

In Figur 4 ist schließlich eine mit den Ausführungsformen gemäß den Figuren 1 und 2 vergleichbare Ausführungsform der Zange 1 dargestellt, bei welcher anstelle der Führungsrolle 14 gemäß der Figur 1 ein ringförmiges Führungselement 21 zwischen die beiden plattenförmigen Elemente 4 des Zangenkörpers 2 eingesetzt ist.

## Patentansprüche

1. Zange zum Verschieben von flexiblem Strangmaterial (3), insbesondere flexiblen Stäben zum Einziehen von Kabeln in Kabelschutzrohre, mit einem Zangenkörper (2) der eine längsverlaufende Öffnung zur Aufnahme eines Teiles des Strangmaterials (3) aufweist, wobei der Zangenkörper (2) einen schwenkbar gelagerten Handgriff (5) aufweist, der derart im Zangenkörper (2) gelagert ist, daß der Handgriff (5) bei Betätigung mindestens teilweise in die längsverlaufende Öffnung des Zangenkörpers (2) eingreift und dem Handgriff (5) im Zangenkörper (2) gegenüberliegend eine antreibbare Fördereinrichtung (10) angeordnet ist,
**dadurch gekennzeichnet,**
**daß** die Fördereinrichtung (10) als Treibriemen (13) ausgebildet ist, der in Längsrichtung des Zangenkörpers (2) umlaufend angeordnet ist.

2. Zange nach Anspruch 1,
**dadurch gekennzeichnet,**
**daß** die Fördereinrichtung (10) eine Achse (12) zum Anschluß eines Antriebs aufweist, die über zumindest eine Seitenfläche des Zangenkörpers (2) hervorsteht.

3. Zange nach Anspruch 2,
**dadurch gekennzeichnet,**
**daß** die Achse (12) zumindest an ihrem über eine Seitenfläche des Zangenkörpers (2) hervorstehenden Ende im Querschnitt polygonal ausgebildet ist.

4. Zange nach Anspruch 2,
**dadurch gekennzeichnet,**
**daß** der Antrieb der Fördereinrichtung (10) manuell mit einer Kurbel und/oder maschinell, beispielsweise mit einem Elektromotor und/oder einer Handbohrmaschine erfolgt.

5. Zange nach Anspruch 1,
**dadurch gekennzeichnet,**
**daß** der Treibriemen (13) als Zahnriemen ausgebildet ist.

6. Zange nach Anspruch 1,
**dadurch gekennzeichnet,**
**daß** der Treibriemen (13) über zwei im Abstand zueinander angeordnete Antriebsrollen (11) umläuft.

7. Zange nach Anspruch 6,
**dadurch gekennzeichnet**,
beide Antriebsrollen (11) antreibbar sind.

8. Zange nach Anspruch 6,
**dadurch gekennzeichnet,**
**daß** zumindest eine Antriebsrolle (11) als Antriebsritzel ausgebildet ist.

9. Zange nach Anspruch 1,
**dadurch gekennzeichnet,**
**daß** der Treibriemen (13) eine den Reibkoeffizienten erhöhende Oberfläche aufweist.

10. Zange nach Anspruch 1,
**dadurch gekennzeichnet,**
**daß** der Zangenkörper (2) zumindest eine Führungsrolle (14) und/oder Führungsleiste (15) aufweist, die in Längsrichtung des Zangenkörpers (2) vor und/oder hinter der Fördereinrichtung (10) angeordnet ist bzw. sind.

11. Zange nach Anspruch 10,
**dadurch gekennzeichnet,**
**daß** die Führungsrollen (14) und/oder Führungsleisten (15) in ihrem Mittelbereich eine Querschnittsverringerung und/oder Ausnehmung aufweisen.

12. Zange nach Anspruch 1;
**dadurch gekennzeichnet,**
**daß** der Zangenkörper (2) aus einem länglichen Griffteil (9) und einem angeformten Kopfteil (8) besteht.

13. Zange nach Anspruch 1,
**dadurch gekennzeichnet,**
**daß** der Handgriff (5) im Zangenkörper (2) verrastbar ist.

14. Zange nach Anspruch 13,
**dadurch gekennzeichnet,**
**daß** der Handgriff (5) im Zangenkörper (2) in verschiedenen Stellungen verrastbar ist.

15. Zange nach Anspruch 1,
**dadurch gekennzeichnet,**
**daß** der Zangenkörper (2) ein Längenmeßwerk aufweist.

16. Zange nach Anspruch 1,
**dadurch gekennzeichnet,**
**daß** der Zangenkörper (2) an seinem vorderen Ende ein Halteelement (19) aufweist, mit dem der Zangenkörper (2) form- und/oder reibschlüssig an einer Verteilerdose oder dergleichen arretierbar ist.

17. Zange nach Anspruch 1,
**dadurch gekennzeichnet,**
**daß** der Zangenkörper (2) aus zwei parallel zueinander angeordneten plattenförmigen Elementen (4) besteht, die miteinander verbunden sind, wobei zwischen den plattenförmigen Elementen (4) zumindest die Fördereinrichtung (10) angeordnet ist.

18. Zange nach Anspruch 10 oder 12,
**dadurch gekennzeichnet,**
**daß** der Zangenkörper (2) insbesondere im Bereich des Griffteils (9) als Rohr ausgebildet ist oder eine Ummantelung (16) aufweist.

19. Zange nach Anspruch 1,
**dadurch gekennzeichnet,**
**daß** der Treibriemen (13) in seiner dem Strangmaterial (3) zugewandten Oberfläche eine Ausnehmung aufweist, die vorzugsweise mit der Außenkontur des Strangmaterials übereinstimmt.

20. Zange nach Anspruch 1,
**dadurch gekennzeichnet,**
**daß** der Handgriff (5) eine Druckfläche (7) hat, die
kreisbogenabschnittförmig ausgebildet ist.

21. Zange nach Anspruch 20,
**dadurch gekennzeichnet,**
**daß** der Radius der kreisbogenabschnittförmigen Druckfläche (7) im wesentlichen mit dem Radius der Vorrichtung (20) zur Aufnahme und Ausgabe des Strangmaterials (3) übereinstimmt.

22. Zange nach Anspruch 2
**dadurch gekennzeichnet,**
**daß** die Achse (12) eine Bitaufnahme mit Kugelkopf hat.

23. Zange nach Anspruch 16,
**dadurch gekennzeichnet,**
**daß** das Halteelement (19) als ein seitlich über dem Zangenkörper (2) hinausragender Bolzen ausgebildet ist.

24. Zange nach Anspruch 6;
**dadurch gekennzeichnet,**
**daß** zumindest eine angetriebene Antriebsrolle (11) mit der Zahnscheibe und der Achse (12) und dem Antriebskupplungselement einteilig ausgebildet ist.

## Claims

1. Pincers for moving flexible strand material (3), in particular flexible rods for introducing cables into cable protection tubes, said pincers comprising a body of pincers (2) including a longitudinally extending opening for receiving a part of said strand material (3), wherein said body of pincers (2) has a handle (5) supported for pivoting movement, which handle is supported in said body of pincers (2) in such a way that the handle (5), when operated, engages at least partly in said longitudinally extending opening of the body of pincers (2), and wherein a conveying means (10) adapted to be driven is arranged opposite said handle (5) in said body of pincers (2),
**characterized in**
**that** said conveying means (10) is formed as a driving belt (13) which is arranged revolving in the longitudinal direction of the body of pincers (2).

2. Pincers according to claim 1,
**characterized in**
**that** said conveying means (10) includes a shaft (12) for the connection of a driving unit, which shaft protrudes beyond at least one lateral surface of said body of pincers (2).

3. Pincers according to claim 2
**characterized in**
**that** said shaft (12) has a polygonal cross-sectional shape at least on its end protruding beyond one lateral surface of said body of pincers (2).

4. Pincers according to claim 2,
**characterized in**
**that** driving of said conveying means (10) is effected manually by means of crank handle and/or mechanically by means of an electric motor and/or a hand drill.

5. Pincers according to claim 1,
**characterized in**
**that** said driving belt (13) is formed as a toothed belt.

6. Pincers according to claim 1,
**characterized in**
**that** said driving belt (13) revolves about two mutually spaced driving pulleys (11).

7. Pincers according to claim 6,
**characterized in**
**that** both driving pulleys (11) are adapted to be driven.

8. Pincers according to claim 6,
**characterized in**
**that** at least one driving pulley (11) is formed as a driving pinion.

9. Pincers according to claim 1,
**characterized in**
**that** said driving belt (13) has a surface which increases the coefficient of friction.

10. Pincers according to claim 1,
**characterized in**
**that** said body of pincers (2) comprises at least one guide pulley (14) and/or guide bead (15) which is/are arranged in front of and/or behind said conveying means, in the longitudinal direction of said body of pincers (2).

11. Pincers according to claim 10,
**characterized in**
**that** said guide pulleys (14) and/or guide beads (15) have a diameter reduction and/or recess in the central portion thereof.

12. Pincers according to claim 1,
**characterized in**
**that** said body of pincers (2) is comprised of a elongate handle part (9) and a head part (8) moulded to said handle part.

13. Pincers according to claim 1
**characterized in**
**that** said handle (5) is lockable in said body of pincers (2).

14. Pincers according to claim 13,
**characterized in**
**that** said handle (5) can be locked in different positions in said body of pincers (5).

15. Pincers according to claim 1,
**characterized in**
**that** said body of pincers (2) includes a length counting device.

16. Pincers according to claim 1,
**characterized in**
**that** said body of pincers (2) includes on its front end a holding element (19) by means of which said body of pincers (2) can be locked to a distributing box or the like.

17. Pincers according to claim 1,
**characterized in**
**that** said body of pincers (2) consists of two mutually parallel plate-shaped elements (4) which are connected to each other, with at least one conveying means (10) being arranged between said plate-shaped elements (4).

18. Pincers according to claim 10 or 12,
**characterized in**
**that** said body of pincers (2) is formed as a tube or has a covering (16), particularly in the handle (9) area thereof.

19. Pincers according to claim 1,
**characterized in**
**that** the driving belt (13) has in its surface facing the strand material (3) a recess which preferably corresponds to the outer countour of the strand material.

20. Pincers according to claim 1,
**characterized in**
**that** the handle (5) has a pressing surface (7) which is in the shape of a section of an arc of a circle.

21. Pincers according to claim 20,
**characterized in**
**that** the radius of said circular arc section-shaped pressing surface (7) substantially corresponds to the radius of the device (20) for taking up and paying out strand material (3).

22. Pincers according to claim 2,
**characterized in**
**that** the shaft (12) has a bit receiver with ball head.

23. Pincers according to claim 16,
**characterized in**
**that** the holding element (19) is formed as a pin laterally protruding above the body of pincers (2).

24. Pincers according to claim 6,
**characterized in**
**that** at least one driven pulley (11) is formed as one piece with the toothed disk and the shaft (12) and the driving clutch element.

## Revendications

1. Pince pour faire coulisser un matériau en écheveau flexible (3), en particulier des tiges flexibles pour tirer des câbles dans des tubes guide-câbles, avec un corps de pince (2) qui a une ouverture dans le sens longitudinal pour loger une partie du matériau en écheveau (3), le corps de pince (2) présentant une poignée (5) positionnée pivotante qui est positionnée dans le corps de pince (2) de telle manière que, lors d'un actionnement, la poignée (5) s'enclenche au moins partiellement dans l'ouverture longitudinale du corps de la pince (2) et qu'un dispositif de transport (10) qui peut être entraîné est placé en face de la poignée (5) dans le corps de la pince (2),
**caractérisée en ce**
**que** le dispositif de transport (10) est configuré comme une courroie de commande (13) qui est placée en circulant dans le sens longitudinal du corps de la pince (2).

2. Pince selon la revendication 1,
**caractérisée en ce**
**que** le dispositif de transport (10) a un axe (12) pour le raccord d'un entraînement qui fait saillie sur au moins une surface latérale du corps de la pince (2).

3. Pince selon la revendication 2,
**caractérisée en ce**
**que** l'axe (12) est configuré de section polygonale au moins à son extrémité qui fai saillie sur une surface latérale du corps de la pince (2).

4. Pince selon la revendication 2,
**caractérisée en ce**
**que** l'entraînement du dispositif de transport (10) se fait manuellement avec une manivelle et/ou mécaniquement, par exemple avec un moteur électrique et/ou une perceuse à main.

5. Pince selon la revendication 1,
**caractérisée en ce**
**que** la courroie d'entraînement (13) est configurée comme une courroie dentée.

6. Pince selon la revendication 1,
**caractérisée en ce**
**que** la courroie d'entraînement (13) circule sur deux galets d'entraînement (11) placés espacés l'un de l'autre.

7. Pince selon la revendication 6,
**caractérisée en ce**
**que** les deux galets d'entraînement (11) peuvent être entraînés.

8. Pince selon la revendication 6,
**caractérisée en ce**
**qu'**au moins un galet d'entraînement (11) est configuré comme pignon d'entraînement.

9. Pince selon la revendication 1,
**caractérisée en ce**
**que** la courroie d'entraînement (13) a une surface qui augmente le coefficient de friction.

10. Pince selon la revendication 1,
**caractérisée en ce**
**que** le corps de la pince (2) a au moins un galet de guidage (14) et/ou une glissière de guidage (15) qui est placée/sont placés dans le sens longitudinal du corps de la pince (2) devant et/ou derrière le dispositif de transport (10).

11. Pince selon la revendication 10,
**caractérisée en ce**
**que** les galets de guidage (14) et/ou les glissières de guidage (15) ont une réduction de section et/ou un évidement dans leur zone centrale.

12. Pince selon la revendication 1,
**caractérisée en ce**
**que** le corps de la pince (2) est constitué par une partie poignée allongée (9) et une partie tête moulée (8).

13. Pince selon la revendication 1,
**caractérisée en ce**
**que** la poignée (5) peut être enclenchée dans le corps de la pince (2).

14. Pince selon la revendication 13,
**caractérisée en ce**
**que** la poignée (5) peut être enclenchée dans le corps de la pince (2) dans différentes positions.

15. Pince selon la revendication 1,
**caractérisée en ce**
**que** le corps de la pince (2) a un élément de mesure de la longueur.

16. Pince selon la revendication 1,
**caractérisée en ce**
**que** le corps de la pince (2) a, à son extrémité antérieure, un élément d'arrêt avec lequel le corps de la pince (2) peut être bloqué de manière crabotée et/ou par friction sur une boîte de distribution ou équivalent.

17. Pince selon la revendication 1,
**caractérisée en ce**
**que** le corps de la pince (2) est constitué par deux éléments en forme de plaque (4) placés parallèlement l'un à l'autre qui sont reliés l'un à l'autre, au moins le dispositif de transport (10) étant placé entre les éléments en forme de plaques (4).

18. Pince selon la revendication 10 ou 12,
**caractérisée en ce**
**que** le corps de la pince (2) est configuré comme un tube en particulier dans la zone de la partie poignée (9) ou présente une gaine (16).

19. Pince selon la revendication 1,
**caractérisée en ce**
**que** la courroie d'entraînement (13) a, dans sa surface tournée vers le matériau en écheveau (3), un creux qui coïncide de préférence avec le contour extérieur du matériau en écheveau.

20. Pince selon la revendication 1,
**caractérisée en ce**
**que** la poignée (5) a une surface de pression (7) qui est configurée en forme de section d'arc de cercle.

21. Pince selon la revendication 20,
**caractérisée en ce**
**que** le rayon de la surface de pression en forme de section d'arc de cercle coïncide substantiellement avec le rayon du dispositif (20) pour le logement et la sortie du matériau en écheveau (3).

22. Pince selon la revendication 2,
**caractérisée en ce**
**que** l'axe (12) a un enregistrement de bits avec tête sphérique.

23. Pince selon la revendication 16,
**caractérisée en ce**
**que** l'élément d'arrêt (19) est configuré comme un boulon qui fait saillie latéralement au-dessus du corps de la pince (2).

24. Pince selon la revendication 6,
**caractérisée en ce**
**qu'**au moins un galet d'entraînement entraîné (11) est configuré en une pièce avec le disque denté et l'axe (12) et l'élément de couplage d'entraînement.
